# EUROPÄISCHE PATENTSCHRIFT

(11) **EP 0 639 739 B1**
(45) Veröffentlichungstag und Bekanntmachung des Hinweises auf die Patenterteilung: **13.11.1996**
(21) Anmeldenummer: 94810464.1
(22) Anmeldetag: 10.08.1994
(51) Int. Cl.: F16L 55/033

(54) **Rohrschelle mit elastischer Einlage**
Pipe clamp with elastic insert
Collier de serrage avec chemise élastique

(30) Priorität: 21.08.1993 DE 4328189
(43) Veröffentlichungstag der Anmeldung: 22.02.1995
(73) Patentinhaber: HILTI Aktiengesellschaft, 9494 Schaan (LI)
(72) Erfinder: Plank, Wolfgang, A-6806 Feldkirch-Tosters (DE)
(74) Vertreter: Wildi, Roland

(56) Entgegenhaltungen:
- EP-A- 0 413 883
- EP-A- 0 518 560
- DE-A- 4 029 090

## Beschreibung

Die Erfindung betrifft eine Rohrschelle für die Halterung von Bauteilen mit einer zentrischen, von zwei gegeneinander bewegbaren Schenkeln gebildeten Ausnehmung und einer elastischen Einlage.mit einem im wesentlichen U-förmigen Querschnitt, deren Basisbereich das Bauteil und deren Seitenbereiche die Rohrschelle umgreifen, wobei die dem Bauteil zugewandte Seite des Basisbereiches wenigstens teilweise mit einer reibungsmindemden Beschichtung versehen ist.

Für die Befestigung von Bauteilen, insbesondere von Rohren, werden Rohrschellen verwendet. Gegenstände, die in den Bauteilen gehalten bzw. Medien, welche in Rohren transportiert werden, können bei thermischen Schwankungen eine Längenänderung der Bauteile bzw. Rohre bewirken. Um die Bewegungen der Bauteile, insbesondere von Rohren, in den entsprechenden Befestigungspunkten ermöglichen zu können ist bereits eine Rohrschelle aus der EP-A- 0 413 883 bekannt, deren Einlage aus einem Basisbereich und zwei Seitenbereichen besteht. Der an Rohren zur Anlage gelangende Basisbereich besitzt gute Gleiteigenschaften und ist gegenüber den Seitenbereichen weicher ausgebildet.

Die Herstellung einer derartigen Einlage ist aufwendig und derart kostspielig, dass von einer wirtschaftlichen Herstellung nicht mehr gesprochen werden kann.

Der Erfindung liegt die Aufgabe zugrunde, eine Einlage für Rohrschellen zu schaffen, die gute Gleiteigenschaften aufweist und wirtschaftlich herstellbar ist.

Erfindungsgemäss wird dies mit einer reibungsmindernden Beschichtung erreicht, die eine Beflockung ist.

Für die Beflockung werden monofile Textilfasem mit einer Länge von 0,3 - 5 mm, die Flock oder Flockmaterial genannt werden, verwendet. Neben dem mechanischen Beflockungsverfahren durch Aufstreuen oder Aufblasen des Flocks auf eine Klebstoffschicht gibt es auch die elektrostatische Beflockung, die heute die grösste Bedeutung erlangt hat. Dabei wird der Flock in einem elektrischen Hochspannungsfeld ausgerichtet und so beschleunigt, dass er mit einem Ende tief in eine offene Klebstoffschicht hineinschiesst und dort gut verankert wird. Die überschüssige, nicht verankerte Flockmenge wird nach dem Trocknen und Abbinden des Klebstoffes abgeblasen bzw. abgebürstet.

Geräusche, die beim Verschieben der Bauteile in der Rohrschelle entstehen , werden durch die Beflockung fast zur Gänze gedämmt. Der Flock ermöglicht die beabstandete Lagerung des Bauteiles gegenüber der Einlage der Rohrschelle. Die Bauteile liegen somit nicht direkt auf der Einlage der Rohrschelle auf.

Da bei der Befestigung von Bauteilen bzw. Rohrleitungen mit entsprechenden Druckbelastungen auf die Einlage zu rechnen ist, werden für die Beflockung vorzugsweise Flocken aus Polyesterfasem verwendet. Diese Polyesterfasem zeichnen sich insbesondere dadurch aus, dass sie selbst beim Auftreten hoher Druckbelastungen durch die Bauteile eine gute Gleitschicht zwischen den Bauteilen und der Einlage der Rohrschelle bilden sowie eine gute Schalldämmung gewährleisten.

Bei der Befestigung von kleineren Bauteilen bzw. von Bauteilen mit geringerem Gewicht können die mit der Beflockung versehenen Teile des Basisbereiches als gegen das Zentrum weisende Vorsprünge ausgebildet sein. Speziell bei der Ausrichtung von Bauteilen, insbesondere von Rohren, ist dies von Vorteil, da durch die geringere Berührungsfläche zwischen dem Bauteil und der Einlage die Verschiebung des Bauteiles in der Rohrschelle zusätzlich erleichtert wird.

Speziell bei Einlagen in Rohrschellen, die ein Bauteil entlang des gesamten Umfanges umgreifen, ist es zweckmässig, wenn die Vorsprünge als parallel zur Längserstreckung der Einlage verlaufende Rippen ausgebildet sind. Auf diese Weise wird eine bessere Zentrierung eines festzulegenden Bauteiles innerhalb der Rohrschelle gewährleistet und eine gute, gleitende Bewegung des Bauteiles in der Rohrschelle ermöglicht.

Die Erfindung wird nachstehend anhand von Zeichnungen, die ein Ausführungsbeispiel wiedergeben, näher erläutert. Es zeigen:
Fig. 1 eine ein Rohr umgebende Rohrschelle mit Einlage;
Fig. 2 einen Schnitt II-II durch die Rohrschelle gemäss Fig. 1;
Fig. 3 eine Detailvergrössung des Ausschnittes III in Fig. 2.

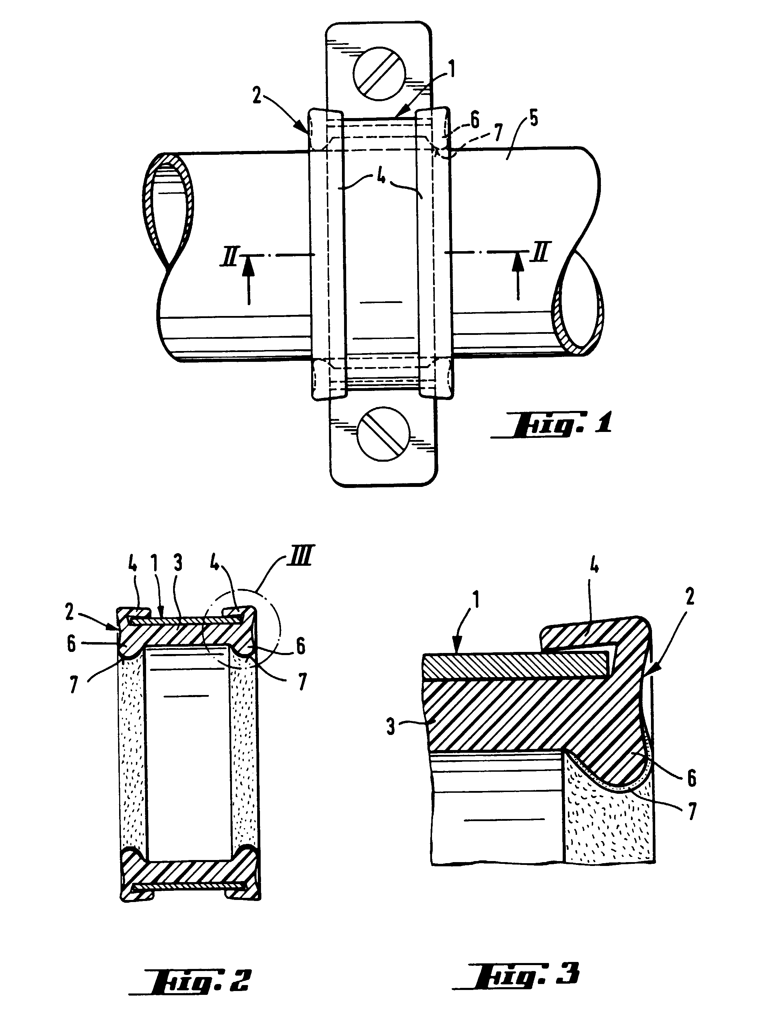

Die Fig. 1 zeigt eine Rohrschelle 1 mit Einlage 2, die mit einem Basisbereich 3 und mit Seitenbereichen 4 die Rohrschelle 1 teilweise umgreift und an der Aussenfläche eines als Rohr 5 ausgebildeten Bauteiles anliegt.

Durch die in den Figuren 2 und 3 gezeigten, halbkreisförmigen Querschnitte von Vorsprüngen 6 der Einlage 2, wird zwischen der äusseren Wandung des Rohres 5 und der Einlage 2 jeweils nur eine Linienauflage bzw. Linienberührung geschaffen. Die Vorsprünge 6 tragen eine reibungsmindemde Beschichtung 7, die aus einer Beflockung besteht. Durch die Linienauflage wird eine zusätzliche Reduzierung der Reibung des Rohres 5 gegenüber der Einlage 2 bewirkt und ein einwandfreies Anliegen der Einlage 2 an allfälligen Unebenheiten des Rohres 5 und eine Verbesserung der Wärmedämmung erreicht.

Die Rohrschelle 1 sowie die Einlage 2 kann ein- oder mehrteilig ausgebildet sein. Die Rohrschelle 1 kann aus verschiedenen Materialien, insbesondere aber aus Stahlblech bestehen.

## Patentansprüche

1. Rohrschelle für die Halterung von Bauteilen mit einer zentrischen, von zwei gegeneinander bewegbaren Schenkeln gebildeten Ausnehmung und einer elastischen Einlage (2) mit einem im wesentlichen U-förmigen Querschnitt deren Basisbereich (3) das Bauteil und deren Seitenbereiche (4) die Rohrschelle (1) umgreifen, wobei die dem Bauteil zugewandte Seite des Basisbereiches (3) wenigstens teilweise mit einer reibungsmindernden Beschichtung (7) versehen ist, **dadurch gekennzeichnet**, dass die reibungsmindernde Beschichtung (7) eine Beflockung ist.

2. Rohrschelle nach Anspruch 1, dadurch gekennzeichnet, dass die Flocken der Beflockung aus Polyesterfasern bestehen.

3. Rohrschelle nach Anspruch 1 oder 2, dadurch gekennzeichnet, dass die mit der Beflockung versehenen Teile des Basisbereiches (3) als gegen das Zentrum weisende Vorsprünge (6) ausgebildet sind.

4. Rohrschelle nach Anspruch 3, dadurch gekennzeichnet, dass die Vorsprünge (6) als parallel zur Längserstreckung der Einlage (2) verlaufende Rippen ausgebildet sind.

## Claims

1. Pipe clamp for holding assembly component comprising a centred cutout formed by two shanks which are moveable relative to each other, and an elastic insert (2) of essentially U-shaped cross-section, the base area (3) of which reaches around the assembly component, and the side areas (4) of which reach around the pipe clamp (1), and the side of the base area (3) oriented towards the assembly component is at least partially provided with a friction-reducing coating (7), **characterised in that** the friction-reducing coating (7) is a flock-coating.

2. Pipe Clamp according to Claim 1, **characterised in that** the flocks of the flock-coating are made of polyester fibres.

3. Pipe Clamp according to Claim 1 or 2, **characterised in that** the portions of the base area (3) which have been provided with a flock-coating are protrusions (6) oriented towards the centre.

4. Pipe Clamp according to Claim 3, **characterised in that** the protrusions (6) are arranged to be webs extending parallel with the longitudinal extent of the insert (2).

## Revendications

1. Collier pour la fixation d'éléments de structure. comprenant un évidement central formé par deux branches mobiles l'une par rapport à l'autre, et une garniture (2) élastique de section transversale sensiblement en forme de U, dont la zone de base (3) entoure l'élément de structure et dont les zones latérales (4) entourent le collier de fixation (1), la face de la zone de base (3) tournée vers l'élément de structure. étant au moins partiellement munie d'un revêtement (7) diminuant la friction, caractérisé en ce que le revêtement (7) diminuant la friction est une matière floquée.

2. Collier de fixation selon la revendication 1, caractérisé en ce que les flocs de la matière floquée se composent de fibres de polyester.

3. Collier de fixation selon la revendication 1 ou 2. caractérisé en ce que les parties de la zone de base (3), garnies de matière floquée, sont conçues comme des saillies (6) pointant vers le centre.

4. Collier de fixation selon la revendication 3, caractérisé en ce que les saillies (6) sont réalisées comme des nervures s'étendant parallèlement à l'extension longitudinale de la garniture (2).
